# EUROPÄISCHE PATENTSCHRIFT

(11) **EP 3 087 820 B1**
(45) Veröffentlichungstag und Bekanntmachung des Hinweises auf die Patenterteilung: **03.06.2020**
(21) Anmeldenummer: 15001288.8
(22) Anmeldetag: 30.04.2015
(51) Int. Cl.: A01D 46/26

(54) **ERNTEGERÄT UND RECHEN FÜR EIN ERNTEGERÄT**
HARVESTING DEVICE AND RAKE FOR A HARVESTING DEVICE
APPAREIL DE RÉCOLTE ET RÂTELIER POUR UN APPAREIL DE RÉCOLTE

(43) Veröffentlichungstag der Anmeldung: 02.11.2016
(73) Patentinhaber: Andreas Stihl AG & Co. KG, 71336 Waiblingen (DE)
(72) Erfinder: Sasse, Daniel, 70374 Stuttgart (DE); Sydow, Gunar, 93900 Ivoti (BR)
(74) Vertreter: Reinhardt, Annette

(56) Entgegenhaltungen:
- EP-A1- 2 491 782
- EP-A2- 2 138 028
- WO-A1-2011/026204
- BR-A- PI0 700 905
- BR-U- MU8 700 205
- DE-A1-102007 002 625

## Beschreibung

Die Erfindung betrifft ein Erntegerät der im Oberbegriff des Anspruchs 1 angegebenen Gattung und einen Rechen für ein Erntegerät der im Oberbegriff des Anspruchs 16 angegebenen Gattung.

Aus der DE 10 2007 002 625 A1 ist ein Erntegerät bekannt, das zwei Rechen besitzt, die im Betrieb hin- und hergehend aufeinander zu und voneinander weg verschwenkt werden. Zwischen den beiden Rechen des Erntegeräts sind ein erster Zwischenraum, der sich im Bereich der Rechenträger und des Antriebselements erstreckt, sowie ein zweiter Zwischenraum, der sich im Bereich der Finger der Rechen erstreckt, gebildet.

Es hat sich gezeigt, dass im Betrieb Äste zwischen die beiden Rechen gelangen und eingeklemmt werden können. Dabei können die Äste und/oder das Erntegerät beschädigt werden.

Bei der EP 2 138 028 A2 ist im Bereich zwischen den Rechenträgern ein Bauteil angeordnet, das den Bereich zwischen den Rechenträgern weitgehend ausfüllt. Dadurch ergeben sich ein vergleichsweise massives Erscheinungsbild und ein vergrößertes Gewicht des Erntegeräts. Bei einer derartigen Anordnung kann bei großem Verschwenkwinkel ein Spalt zwischen dem Bauteil und den Rechenträgern entstehen, in den Äste eingeklemmt werden können, die eine weitere Bewegung des Rechenträgers blockieren können.

Der Erfindung liegt die Aufgabe zu Grunde, ein Erntegerät der gattungsgemäßen Art zu schaffen, das einen einfachen Aufbau besitzt und das Einklemmen von Ästen zwischen den Rechen weitgehend verhindert. Eine weitere Aufgabe der Erfindung besteht darin, einen Rechen für ein Erntegerät zu schaffen, mit dem das Einklemmen von Ästen weitgehend verhindert wird.

Diese Aufgabe wird bezüglich des Erntegeräts durch ein Erntegerät mit den Merkmalen des Anspruchs 1 gelöst. Bezüglich des Rechens wird die Aufgabe durch einen Rechen mit den Merkmalen des Anspruchs 16 gelöst.

Im Betrieb verschwenken die Rechen zwischen einer aufeinander zu geschwenkten Stellung und einer voneinander weg geschwenkten Stellung. In der aufeinander zu geschwenkten Stellung befinden sich die Rechen dabei in einer inneren Endlage und in der voneinander weg geschwenkten Stellung in einer äußeren Endlage. Um zu verhindern, dass Äste in den ersten, mindestens teilweise von den Rechenträgern und dem Antriebselement begrenzten Zwischenraum gelangen können, ist eine Sperreinrichtung vorgesehen, die mindestens ein mit einem Rechen bewegtes Sperrelement umfasst, das in Blickrichtung parallel zu einer Schwenkachse eines Rechens zwischen dem ersten Zwischenraum und dem zweiten Zwischenraum ragt. Die Sperreinrichtung trennt dabei den ersten Zwischenraum und den zweiten Zwischenraum in jeder Stellung der Rechen derart voneinander, dass die Zwischenräume in Blickrichtung parallel zu einer Schwenkachse eines Rechens höchstens über einen Spalt von maximal 5 mm verbunden sind. Dadurch, dass die Zwischenräume in jeder Stellung der Rechen weitgehend voneinander getrennt und höchstens über einen schmalen Spalt von maximal 5 mm miteinander verbunden sind, können keine dickeren Äste in den ersten Zwischenraum gelangen. Durch die Anordnung des Sperrelements an dem Rechen oder einem mit dem Rechen bewegten Bauteil ergibt sich ein einfacher Aufbau. Das Sperrelement kann mit vergleichsweise wenig Material realisiert werden und besitzt dadurch ein geringes Gewicht. Das am Rechen oder an einem mit dem Rechen bewegten Bauteil angeordnete Sperrelement kann unabhängig von der Gestaltung und räumlichen Anordnung des Antriebselements ausgebildet werden. Ein mit einem Rechen bewegtes Sperrelement kann auch bei großem Schwenkwinkel der Rechen eine weitgehende Trennung der Zwischenräume erreichen und so auch bei Erntegeräten mit großem Verschwenkwinkel der Rechen ein Einklemmen von Ästen verhindert.

Das Sperrelement ist insbesondere an einem Rechen gehalten. Vorzugsweise ist das Sperrelement einteilig mit dem Rechen ausgebildet. Das Sperrelement besteht dabei insbesondere aus dem gleichen Material wie der Rechen, vorzugsweise aus Kunststoff. Es kann jedoch auch vorteilhaft sein, dass das Sperrelement an einem Rechenträger gehalten ist. Das Sperrelement ist dabei insbesondere einteilig mit dem Rechenträger ausgebildet. Der Rechenträger kann dabei bevorzugt separat von dem Rechen ausgebildet sein. Vorzugsweise besteht der Rechenträger aus Metall und der Rechen aus Kunststoff. Bei einer einteiligen Ausbildung des Sperrelements mit dem Rechenträger kann auch das Sperrelement auf einfache Weise aus Metall ausgebildet sein und besitzt dadurch eine hohe Stabilität. Es kann jedoch auch vorgesehen sein, dass der Rechenträger und der Rechen einteilig, insbesondere aus Kunststoff, ausgebildet sind und das Sperrelement an dem einteiligen Bauteil gehalten ist. Der Rechenträger ist der Bereich des Rechens, mit dem der Rechen gelagert und angetrieben ist. Vorteilhaft ist ein einteiliges Bauteil vorgesehen, das Rechenträger, Rechen und Sperrelement bildet.

Der erste Zwischenraum kann sich dabei auch in den Bereich der innenliegenden Finger der Rechen erstrecken, so dass das mindestens eine Sperrelement im Bereich der Finger des Rechens angeordnet ist. Alternativ kann sich der zweite Zwischenraum auch in den Bereich zwischen den Rechenträgern erstrecken, so dass das mindestens eine Sperrelement im Bereich des Rechenträgers angeordnet ist.

Es hat sich gezeigt, dass eine Trennung des ersten und des zweiten Zwischenraums voneinander in einer Blickrichtung parallel zur Schwenkachse eines Rechens ausreichend ist. Eine vollständige Trennung der Zwischenräume ist nicht notwendig, da Äste üblicherweise etwa in Richtung der Schwenkachse ausgerichtet sind und so beispielsweise Sperrelemente, die in zueinander versetzten Ebenen angeordnet sind, nicht überwinden können, selbst wenn diese in Richtung der Schwenkachse einen Abstand zueinander aufweisen. Vorteilhaft trennt die Sperreinrichtung den ersten Zwischenraum und den zweiten Zwischenraum in jeder Stellung der Rechen in der Blickrichtung parallel zu einer Schwenkachse eines Rechens vollständig voneinander. Dadurch ist auch das Eintreten dünner Äste aus dem zweiten Zwischenraum in den ersten Zwischenraum weitgehend vermieden. Die Breite des Zwischenraums verringert sich vorteilhaft vom Sperrelement bis zu den freien Enden der innenliegenden Finger der Rechen nicht. Die Breite des Zwischenraums ist dabei quer zur Längsrichtung der innenliegenden Finger der Rechen und insbesondere senkrecht zu einer Bewegungsachse des Antriebselements gemessen. Dadurch, dass sich die Breite des Zwischenraums in Richtung auf die freien Enden der Finger nicht verringert, wird ermöglicht, dass die Äste, die sich im zweiten Zwischenraum befinden, bei der Schwenkbewegung der Rechen aufeinander zu in Richtung auf die freien Enden der innenliegenden Finger ausweichen und dadurch nicht eingeklemmt werden können.

Vorteilhaft ist vorgesehen, dass die Innenseiten der innenliegenden Finger der Rechen in der Blickrichtung parallel zu einer Schwenkachse eines Rechens in der aufeinander zu geschwenkten Stellung der Rechen einen Winkel einschließen, der größer als 0° ist und der in Richtung auf die freien Enden der innenliegenden Finger öffnet. Der Winkel beträgt vorteilhaft mindestens 0,5°, insbesondere mindestens 1°. Der Winkel ist vorteilhaft kleiner als 10°, insbesondere kleiner als 5°, um einen zu großen Abstand zwischen den freien Enden der beiden innenliegenden Finger der Rechen in der voneinander weg geschwenkten Stellung der Rechen zu vermeiden. Der Winkel, der in Richtung auf die freien Enden der innenliegenden Finger öffnet, bedingt, dass die Finger auf Äste im zweiten Zwischenraum bei der Schwenkbewegung aufeinander zu eine Kraft in Richtung von dem mindestens einen Sperrelement weg, also aus dem zweiten Zwischenraum in Richtung auf die freien Enden der Finger ausüben und dadurch Äste aus dem zweiten Zwischenraum fördern. Dadurch kann ein Einklemmen von Ästen auch zwischen den Fingern vermieden werden.

Ein einfacher Aufbau ergibt sich, wenn das Sperrelement als Nase ausgebildet ist. Die Breite des Sperrelements, die quer zur Längsrichtung des zugeordneten innenliegenden Fingers gemessen ist, nimmt vorteilhaft zum freien Ende der Finger hin ab. Der Verlauf der den zweiten Zwischenraum begrenzenden Oberseite des Sperrelements ist vorteilhaft stetig, insbesondere gerade oder bogenförmig. Besonders vorteilhaft verläuft die Oberseite konkav. Durch die konkave Form des Sperrelements wird die Förderwirkung in Richtung zum freien Ende der Finger hin verstärkt. Auch am Sperrelement selbst ist dadurch ein Einklemmen von Ästen weitgehend vermieden. Der konkave Verlauf der Oberseite ist insbesondere vorteilhaft bei zwei Sperrelementen, die jeweils an einem der Rechen angeordnet sind. Auch ein linearer oder konvexer Verlauf der Oberseite kann jedoch vorteilhaft sein. Vorteilhaft besitzt das Sperrelement eine abgerundete Spitze, an die die Oberseite anschließt.

Vorteilhaft ist das Sperrelement an einem Befestigungsende des innenliegenden Fingers des Rechens an dem Rechen festgelegt. Das Befestigungsende ist dabei der Bereich des Fingers, an dem der Finger an einem Halteabschnitt des Rechens festgelegt ist. Dadurch steht weitgehend die gesamte Länge der innenliegenden Finger als Eingriffsbereich in einen abzuerntenden Baum oder Strauch zur Verfügung. Der Weg, den das Sperrelement bei der Schwenkbewegung des Rechens zurücklegt, ist vergleichsweise klein. Gleichzeitig wird ein Eindringen von Ästen in den Bereich zwischen den Rechenträgern, also in den ersten Zwischenraum, vermieden.

Vorteilhaft überlappt das Sperrelement in der aufeinander zu geschwenkten Stellung der Rechen in der Blickrichtung parallel zu einer Schwenkachse eines Rechens den anderen Rechen. Durch die Überlappung des Sperrelements mit dem anderen Rechen wird der Abstand zwischen den Rechen unabhängig von der Stellung der Rechen immer, insbesondere lückenlos, überbrückt. Es ergibt sich in jeder Stellung der Rechen eine weitgehende, insbesondere vollständige Trennung der beiden Zwischenräume durch die Sperreinrichtung. In der inneren Endlage fügen sich die Sperrelemente vorteilhaft in Gegenkonturen des anderen Rechens ein, so dass eine vergleichsweise breite Sperreinrichtung bereitgestellt werden kann und sich dennoch ein kompakter Aufbau ergibt. Das Sperrelement liegt in der aufeinander zu geschwenkten Stellung dabei vorteilhaft in einer Aussparung des anderen Rechens.

Vorteilhaft besitzt jeder Rechen ein Sperrelement, und die beiden Sperrelemente bilden die Sperreinrichtung. Bevorzugt sind die beiden Rechen achsensymmetrisch zur Bewegungsachse des Antriebselements ausgebildet. Die beiden Rechen sind vorteilhaft achsensymmetrisch zu einer Mittelachse eines Führungsrohrs des Erntegeräts ausgebildet. Das Erntegerät besitzt demnach zwei vorzugsweise identisch zueinander ausgebildete Rechen, die lediglich in anderer Drehlage an den zugeordneten Rechenträgern zu montieren sind. Dadurch werden Herstellung und Lagerhaltung sowie die Bereithaltung von Ersatzteilen, auch beim Benutzer, vereinfacht.

Für unterschiedliche Anwendungen sind üblicherweise unterschiedliche Rechen vorgesehen, die sich beispielsweise in der Anzahl der Finger und/oder der Anordnung der Finger, beispielsweise in einer Ebene oder in zueinander geneigten oder versetzten Ebenen, unterscheiden können. Vorteilhaft besitzt das Erntegerät einen ersten Satz von Rechen mit einem linken Rechen und einem rechten Rechen sowie einen zweiten Satz von Rechen mit einem linken Rechen und einem rechten Rechen. Die Sperreinrichtungen der beiden Sätze von Rechen sind dabei vorzugsweise derart ausgebildet, dass der rechte Rechen des ersten Satzes von Rechen und der linke Rechen des zweiten Satzes von Rechen sowie der linke Rechen des ersten Satzes von Rechen und der rechte Rechen des zweiten Satzes von Rechen sich in der aufeinander zu geschwenkten Stellung blockieren. Die Sperreinrichtungen bilden dabei eine Blockiereinrichtung. Die Blockiereinrichtung ist vorteilhaft derart ausgebildet, dass auch ein Verschwenken der Rechen in die aufeinander zu geschwenkte Stellung blockiert ist. Es kann auch vorgesehen sein, dass die Blockiereinrichtung bereits die Montage der beiden nicht aus dem gleichen Satz von Rechen stammenden Rechen verhindert. Dadurch wird ein Betrieb des Erntegeräts mit zwei Rechen, die nicht zur Kombination miteinander vorgesehen sind, vermieden. So kann beispielsweise vermieden werden, dass Rechen mit deutlich unterschiedlichem Gewicht, beispielsweise aufgrund unterschiedlicher Anzahl von Fingern, miteinander verwendet werden. Die Verwendung von Rechen mit unterschiedlichem Gewicht führt zu Vibrationen, die das Erntegerät beschädigen können. Dies kann durch die entsprechende Ausbildung der Sperreinrichtungen auf einfache Weise verhindert werden. Vorteilhaft ist die Sperreinrichtung des ersten Satzes von Rechen bezogen auf eine Mittelebene eines Rechens spiegelsymmetrisch zu der Sperreinrichtung des zweiten Satzes von Rechen angeordnet. Dadurch kann auf einfache Weise eine Blockiereinrichtung gebildet werden, die die Montage oder ein Verschwenken der Rechen in die aufeinander zu geschwenkte Stellung blockieren.

Der Rechen besitzt vorteilhaft einen Halteabschnitt, an dem alle Finger des Rechens gehalten sind und mit dem der Rechen an dem Rechenträger festgelegt ist. Dabei kann vorgesehen sein, dass alle Finger des Rechens in einer Ebene liegen. Es kann jedoch auch vorteilhaft sein, dass die Finger des Rechens in unterschiedlichen Ebenen, insbesondere in zueinander geneigten Ebenen angeordnet sind.

Das Erntegerät besitzt vorteilhaft ein Führungsrohr, an dessen einem Ende die Rechen angeordnet sind. Die Bewegung des Antriebselements wird vorteilhaft über mindestens einen Gelenkhebel auf den Rechen übertragen, wobei der Gelenkhebel an einem ersten Befestigungspunkt am Antriebselement und an einem zweiten Befestigungspunkt am Rechenträger gehalten ist. Der Gelenkhebel begrenzt dabei vorteilhaft den ersten Zwischenraum. Vorteilhaft besitzt das Erntegerät einen Antriebsmotor, der in einem Gehäuse angeordnet ist. Das Gehäuse, in dem der Antriebsmotor angeordnet ist, ist vorteilhaft an dem dem Rechen abgewandt liegenden Ende des Führungsrohrs angeordnet. Es kann jedoch auch vorgesehen sein, dass der Antriebsmotor an dem Ende des Führungsrohrs angeordnet ist, an dem auch die Rechen angeordnet sind.

Für einen Rechen für ein Erntegerät, der einen im Betrieb einem weiteren Rechen zugewandten, innenliegenden Finger besitzt, wobei der Rechen eine Mittelebene besitzt, in der ein Halteabschnitt des Rechens zur Fixierung des Rechens an einem Emtegerät liegt, ist vorgesehen, dass der Rechen ein Sperrelement besitzt, das sich von einer Seite seines innenliegenden Fingers erstreckt und eine Breite besitzt, die in einer Blickrichtung senkrecht zur Mittelebene senkrecht zu einer Innenseite des innenliegenden Fingers gemessen ist und die mindestens 10 mm, insbesondere mindestens 20 mm beträgt. Als besonders vorteilhaft wird eine Breite des Sperrelements von 10 mm bis 30 mm angesehen. Die Breite des Sperrelements ist dabei senkrecht zur Ebene der Innenseite des innenliegenden Fingers gemessen. Werden zwei Rechen mit derartigem Sperrelement an einem Erntegerät angeordnet, können der erste Zwischenraum und der zweite Zwischenraum im Betrieb auch dann, wenn die äußere Endlage der Rechen eine sehr weit nach außen geschwenkte Stellung ist, weitgehend getrennt werden. Vorteilhaft bilden zwei Rechen einen Satz von Rechen für das Erntegerät, und die Summe der Breiten aller Sperrelemente beträgt mindestens 20 mm, insbesondere mindestens 40 mm. Dabei kann ein Sperrelement mit einer Breite von mindestens 20 mm, insbesondere mindestens 40 mm vorgesehen sein oder beide Rechen weisen Sperrelemente auf, deren Breite in der Summe mindestens 20 mm, insbesondere mindestens 40 mm ergibt. Dabei ist vorteilhaft an jedem Rechen ein Sperrelement mit einer Breite von mindestens 10 mm, insbesondere mindestens 20 mm vorgesehen.

Vorteilhaft besitzt das Sperrelement eine Breite, die senkrecht zur Ebene der Innenseite des innenliegenden Fingers gemessen ist und eine Höhe, die in der Ebene der Innenseite des innenliegenden Fingers und etwa in Längsrichtung des innenliegenden Fingers gemessen ist. Die Breite des Sperrelements ist vorteilhaft mindestens halb so groß wie seine Höhe. Die Breite des Sperrelements entspricht insbesondere mindestens der Höhe des Sperrelements. Bevorzugt ist die Breite des Sperrelements größer als die Höhe des Sperrelements. Das Sperrelement besitzt vorteilhaft ein dem innenliegenden Finger abgewandt liegendes freies Ende. Das freie Ende besitzt zur Mittelebene des Rechens vorteilhaft einen Abstand, der kleiner als das Doppelte der Breite des Befestigungsbereichs, insbesondere kleiner als das 1,5fache der Breite des Befestigungsbereichs, bevorzugt kleiner als die Breite des Befestigungsbereichs, besonders bevorzugt kleiner als das 0,75fache der Breite des Befestigungsbereichs ist. Die Breite des Befestigungsbereichs ist dabei senkrecht zur Mittelebene gemessen. Durch den geringen Abstand des freien Endes des Sperrelements zur Mittelebene kann auch ein schräges Eindringen von Ästen in den ersten Zwischenraum weitgehend vermieden werden.

Ausführungsbeispiele der Erfindung werden im Folgenden anhand der Zeichnung erläutert. Es zeigen:
- Fig. 1: eine perspektivische Darstellung eines Erntegeräts,
- Fig. 2: eine schematische Draufsicht auf das Erntegerät aus Fig. 1,
- Fig. 3: eine perspektivische Ansicht des Bereichs der Rechen des Erntegeräts in der aufeinander zu geschwenkten Stellung,
- Fig. 4: eine Draufsicht auf den Bereich der Rechen des Erntegeräts aus Fig. 1,
- Fig. 5: eine Ansicht in Richtung des Pfeils V in Fig. 4,
- Fig. 6: den Ausschnitt VI aus Fig. 5 in vergrößerter Darstellung,
- Fig. 7: eine Draufsicht auf den Bereich der Rechen in der voneinander weg geschwenkten Stellung,
- Fig. 8: eine ausschnittsweise, vergrößerte Ansicht in Richtung des Pfeils VIII in Fig. 7,
- Fig. 9: eine perspektivische Darstellung des Erntegeräts mit einem weiteren Satz von Rechen,
- Fig. 10: eine ausschnittsweise perspektivische Darstellung des Bereichs der Rechen aus Fig. 9,
- Fig. 11: eine vergrößerte, ausschnittsweise Draufsicht auf den Bereich der Sperreinrichtung der Rechen aus den Figuren 9 und 10,
- Fig. 12: eine Darstellung des Bereichs der Rechen des Erntegeräts mit daran montierten Rechen unterschiedlicher Sätze,
- Fig. 13: eine vergrößerte, ausschnittsweise Ansicht in Richtung des Pfeils XIII in Fig. 12,
- Fig. 14: ein Erntegerät im Bereich der Rechen mit einem weiteren Satz von Rechen,
- Fig. 15: eine Ansicht in Richtung des Pfeils XV in Fig. 14,
- Fig. 16: eine Seitenansicht in Richtung des Pfeils XVI in Fig. 14,
- Fig. 17: einen Schnitt entlang der Linie XVII-XVII in Fig. 14.

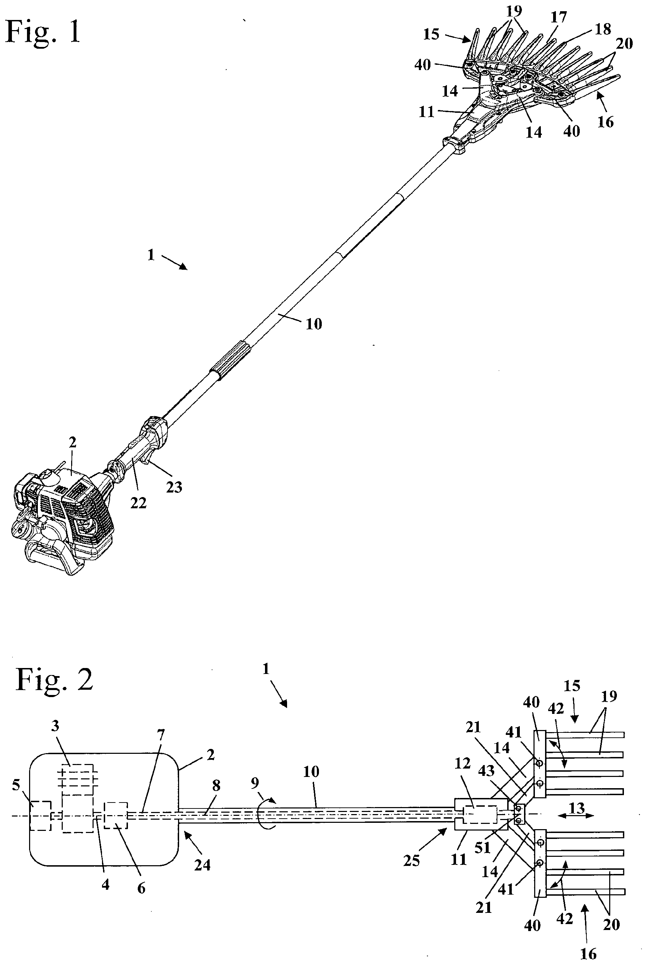

Fig. 1 zeigt ein Erntegerät 1, nämlich einen Kaffeeernter. Das Erntegerät 1 kann jedoch auch ein Olivenschüttler oder dgl. sein. Das Erntegerät 1 besitzt ein Gehäuse 2, an dem ein Führungsrohr 10 festgelegt ist. Benachbart zum Gehäuse 2 ist am Führungsrohr 10 ein Handgriff 22 mit einem Bedienhebel 23, nämlich einem Gashebel, vorgesehen. Weitere Bedienelemente am Handgriff 22 können zweckmäßig sein. An dem dem Gehäuse 2 abgewandten Ende des Führungsrohrs 10 ist ein Getriebegehäuse 11 angeordnet. Am Getriebegehäuse 11 sind zwei Arme 14 vorgesehen, an denen jeweils ein Rechenträger 40 schwenkbar gelagert ist. An den Rechenträgern 40 sind ein linker Rechen 15 und ein rechter Rechen 16 angeordnet. Der linke Rechen 15 besitzt einen innenliegenden, dem rechten Rechen 16 zugewandten Finger 17 sowie weitere, vom rechten Rechen 16 weiter entfernt liegende Finger 19. Der rechte Rechen 16 besitzt einen innenliegenden Finger 18, der benachbart zum innenliegenden Finger 17 des linken Rechens 15 liegt. Der rechte Rechen 16 besitzt weitere, vom linken Rechen 15 weiter entfernt liegende Finger 20. Im Ausführungsbeispiel sind alle Finger 17, 18, 19, 20 in einer Ebene angeordnet.

Fig. 2 zeigt schematisch die Antriebseinheit der Rechen 15 und 16. Im Gehäuse 2 ist ein Antriebsmotor 3 der Antriebseinheit angeordnet. Im Ausführungsbeispiel ist der Antriebsmotor 3 als Verbrennungsmotor ausgebildet, der über eine Starteinrichtung 5, vorzugsweise einen Seilzugstarter, zu starten ist. Der Antriebsmotor 3 besitzt eine Kurbelwelle 4, die über eine Kupplung 6 eine Antriebswelle 7 um eine Drehachse 8 rotierend antreibt. Der rotierende Antrieb der Antriebswelle 7 ist in Fig. 2 schematisch durch den Pfeil 9 angedeutet. Die Antriebswelle 7 ragt durch das Führungsrohr 10 und bildet die Eingangswelle für ein im Getriebegehäuse 11 angeordnetes Getriebe 12. Das Gehäuse 2 ist dabei an einem ersten Ende 24 des Führungsrohrs 10 angeordnet und das Getriebegehäuse 11 an einem zweiten Ende 25 des Führungsrohrs 10. Das Getriebe 12 wandelt die Drehbewegung um die Drehachse 8 in eine hin- und hergehende Bewegung in Richtung einer Bewegungsachse 51 um. Die Bewegungsachse 51 liegt im Ausführungsbeispiel koaxial zur Drehachse 8. Auch eine andere Anordnung der Bewegungsachse 51 kann jedoch vorteilhaft sein. Am Ausgang des Getriebes 12 ist ein Antriebselement 43, im Ausführungsbeispiel ein Gabelkopf, angeordnet, der in Richtung der Bewegungsachse 51 hin- und hergehend angetrieben ist, wie durch den Doppelpfeil 13 verdeutlicht ist.

Die Rechen 15 und 16 sind an den Armen 14 mit ihren Rechenträgern 40 um Schwenkachsen 41 schwenkbar gelagert. Die Schwenkachsen 41 liegen senkrecht zur Drehachse 9 der Antriebswelle 7 und zur Bewegungsachse 51 des Antriebselements 43 sowie senkrecht zur Ebene der Rechen 15, 16. Das Antriebselement 43 ist mit den Rechenträgern 40 über Gelenkhebel 21 verbunden, die zu den Schwenkachsen 41 einen Abstand besitzen. Aufgrund der hin- und hergehenden Bewegung des Antriebselements 43 werden die Rechenträger 40 mit den Rechen 15, 16 um die Schwenkachsen 41 hin- und herschwenkend angetrieben, wie durch die Pfeile 42 verdeutlicht ist. Dabei werden die Rechen 15 und 16 zwischen einer aufeinander zu geschwenkten Stellung und einer voneinander weg geschwenkten Stellung verschwenkt.

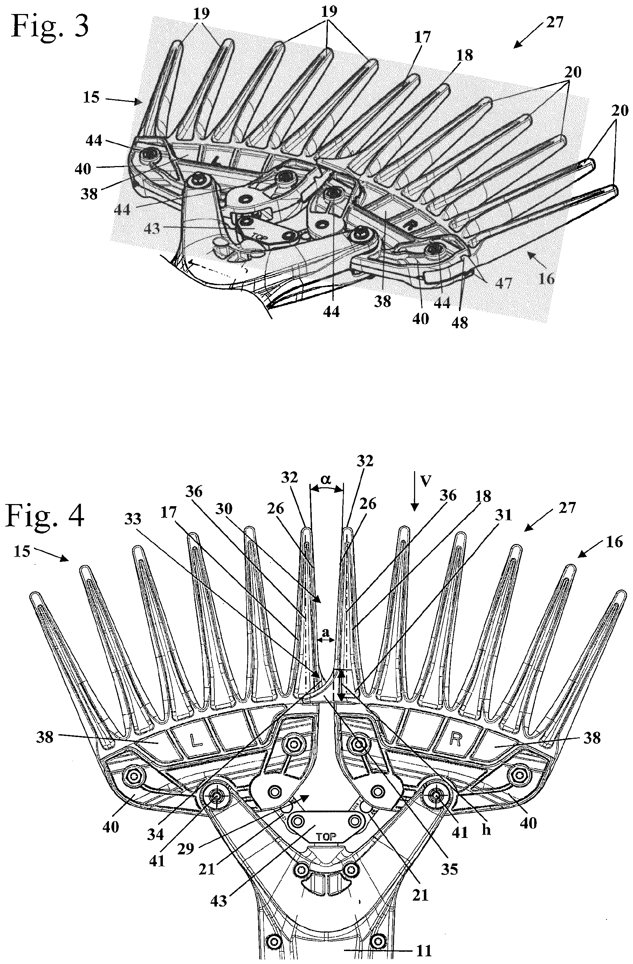

Fig. 3 zeigt die Gestaltung der Rechen 15 und 16 sowie deren Anbindung an den Rechenträgern 40 im Einzelnen. In Fig. 3 sind die Rechen 15 und 16 in der aufeinander zu geschwenkten Stellung 27 gezeigt. Wie Fig. 3 zeigt, besitzt jeder Rechen 15, 16 neben dem innenliegenden Finger 17 bzw. dem innenliegenden Finger 18 fünf weitere Finger 19 bzw. 20. Jeder Rechen 15, 16 besitzt einen Halteabschnitt 38, mit dem er am zugehörigen Rechenträger 40 festgelegt ist. Wie Fig. 3 zeigt, sind im Ausführungsbeispiel Führungsnuten 47 an den Rechenträgern 40 vorgesehen, in die Führungsleisten 48 der Rechen 15 und 16 ragen. Die Anbindung der Rechen 15 und 16 an den Rechenträgern 40 ist so vorgesehen, dass die Rechen etwa in einer Längsrichtung 36 der Finger 17, 18, 19, 20 (Fig. 4) formschlüssig an den Rechenträgern 40 gehalten sind. Durch die Gestaltung mit Führungsnut 47 und Führungsleiste 48 können die Rechen 15 und 16 seitlich in die Rechenträger 40 eingeschoben werden. Die Fixierung der Rechen 15, 16 an den Rechenträgern 40 erfolgt über Befestigungselemente 44, im Ausführungsbeispiel über in Muttern eingeschraubte Schrauben. Im Ausführungsbeispiel sind für jeden Rechen 15, 16 zwei Befestigungselemente 44 vorgesehen. Die Schwenkachsen 41 sind dabei an den Rechenträgern 40 und nicht an den Rechen 15, 16 selbst ausgebildet.

In der in den Figuren 3 und 4 gezeigten aufeinander zu geschwenkten Stellung 27 der Rechen 15 und 16 befindet sich das Antriebselement 43 in der am weitesten zum Getriebegehäuse 11 bewegten Stellung. Wie Fig. 4 zeigt, ist zwischen den beiden Rechenträgern 40, dem Antriebselement 43 und den beiden Gelenkhebeln 21 ein erster Zwischenraum 29 gebildet. Ein zweiter Zwischenraum 30 ist zwischen den innenliegenden Fingern 17 und 18 der beiden Rechen 15 und 16 gebildet. Um ein Übertreten von Ästen oder dgl. aus dem zweiten Zwischenraum 30 in den ersten Zwischenraum 29 und dort ein Einklemmen zu vermeiden, ist eine Sperreinrichtung 33 vorgesehen, die den ersten Zwischenraum 29 vom zweiten Zwischenraum 30 trennt. Die Sperreinrichtung 33 ist durch ein am linken Rechen 15 angeordnetes erstes Sperrelement 34 und ein am rechten Rechen 16 angeordnetes zweites Sperrelement 35 gebildet. Die Sperrelemente 34 und 35 sind benachbart zu einem Befestigungsende 31 der Finger 17, 18 an den einander zugewandten Innenseiten 26 der Finger 17 und 18 angeordnet. Das Befestigungsende 31 der Finger 17, 18 19, 20 ist dabei der Bereich des jeweiligen Fingers 17, 18, 19, 20, an dem der Finger 17, 18, 19, 20 mit dem Halteabschnitt 38 verbunden ist. Im Ausführungsbeispiel sind die Finger 17, 18, 19, 20 dabei jeweils einteilig mit dem zugeordneten Halteabschnitt 38 ausgebildet.

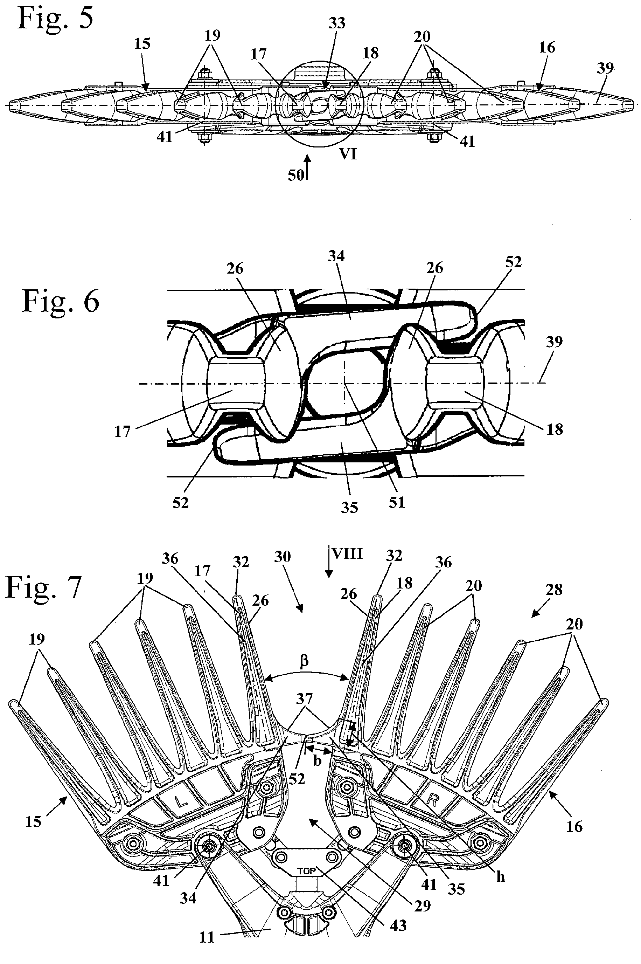

Das erste Sperrelement 34 ragt in der in Fig. 4 gezeigten Ansicht hinter den rechten Rechen 16, und das zweite Sperrelement 35 ragt in dieser Ansicht vor den ersten Rechen 15. Fig. 4 zeigt eine Ansicht in einer Blickrichtung parallel zu den Schwenkachsen 41 der Rechen 15 und 16. Diese Blickrichtung 50 ist in Fig. 5 eingezeichnet. Wie Fig. 4 auch zeigt, ist in dieser Blickrichtung 50 zwischen den Innenseiten 26 der innenliegenden Finger 17, 18 ein Abstand gebildet, der einer Breite a des zweiten Zwischenraums 30 entspricht. Die Breite a nimmt dabei im Ausführungsbeispiel in Richtung auf ein freies Ende 32 der Finger 17, 18 zu. Die Breite a ist senkrecht zur Bewegungsachse 51 und quer zu den Längsrichtungen 36 der Finger 17 und 18 gemessen. Die Innenseiten 26 der innenliegenden Finger 17 und 18 schließen miteinander einen Winkel α ein, der größer als 0° ist. Der Winkel α öffnet dabei in Richtung auf die freien Enden 32 der Finger 17, 18. Der Winkel α ist größer als 0°, vorteilhaft größer als 0,5°, insbesondere größer als 1°. Um einen geringen Abstand der freien Enden 32 der innenliegenden Finger 17 und 18 zu erreichen, ist der Winkel α vorteilhaft kleiner als 10°, insbesondere kleiner als 5°. Aufgrund der Neigung der Innenseiten 26 der innenliegenden Finger 17 und 18 zueinander werden Äste oder dgl., die sich im zweiten Zwischenraum 30 befinden, bei der Bewegung der Rechen 15, 16 in die aufeinander zu geschwenkte Stellung 27 in Richtung auf das freie Ende 32 der Finger 17, 18, also aus dem zweiten Zwischenraum 30 und weg vom ersten Zwischenraum 29, bewegt. Es kann jedoch auch vorgesehen sein, dass die Innenseiten 26 der innenliegenden Finger 17, 18 parallel zueinander verlaufen, so dass die Breite a des zweiten Zwischenraums 30 konstant ist und der Winkel α 0° beträgt. Die Breite a des zweiten Zwischenraums 30 nimmt in Richtung auf die freien Enden 32 der Finger 17, 18 vorteilhaft nicht ab, so dass auf Äste zwischen den innenliegenden Fingern 17 und 18 keine Kräfte in Richtung auf den ersten Zwischenraum 29 ausgeübt werden und die Äste nicht in Richtung auf den ersten Zwischenraum 20 geschoben werden können.

Wie Fig. 4 auch zeigt, besitzen die Sperrelemente 34, 35 eine Höhe h, die in der Ebene der Innenseite 26 des zugeordneten innenliegenden Fingers 17 gemessen ist. Die Höhe h ist dabei etwa in Längsrichtung des innenliegenden Fingers 17 gemessen. Das Sperrelement 34, 35 ist jeweils der Bereich, der über die in Fig. 4 gestrichelt angedeutete Verlängerung der Innenseite 26 des zugeordneten Fingers 17, 18 hinausragt. Erstreckt sich das Sperrelement über das Befestigungsende 31 des Fingers hinaus, so ist die Höhe h in der Ebene gemessen, in der die Innenseite 26 liegt. Bei nicht eben oder gerade verlaufender Innenseite 26 wird als Ebene der Innenseite 26 eine näherungsweise Ebene angenommen.

Wie die Figuren 5 und 6 zeigen, liegen alle Finger 17, 18, 19, 20 der Rechen 15, 16 in einer Mittelebene 39, die die Bewegungsachse 51 enthält. Die Sperrelemente 34 und 35 liegen auf gegenüberliegenden Seiten der Mittelebene 39. Die Sperrelemente 34 und 35 überlappen sich dabei in der Blickrichtung 50 gesehen. Die Sperrelemente 34, 35 verschließen den ersten Zwischenraum 29 gegenüber dem zweiten Zwischenraum 30, so dass ein Übertreten von Ästen oder dgl. aus dem zweiten Zwischenraum 30 in den ersten Zwischenraum 29 weitgehend vermieden ist. Wie Fig. 6 zeigt, sind die Sperrelemente 34 und 35 dabei achsensymmetrisch zur Bewegungsachse 51 ausgebildet. In der in den Figuren 5 und 6 gezeigten Ansicht sind die Sperrelemente 34 und 35 punktsymmetrisch zur Bewegungsachse 51 ausgebildet.

Fig. 7 zeigt die Rechen 15 und 16 in der voneinander weg geschwenkten Stellung 28. In dieser Stellung ist das Antriebselement 43 am weitesten vom Getriebegehäuse 11 entfernt angeordnet. Die Innenseiten 26 der innenliegenden Finger 17 und 18 schließen einen Winkel β ein, der deutlich größer als 0° ist. Im Ausführungsbeispiel beträgt der Winkel β 20° bis 40°, insbesondere etwa 30°. Wie Fig. 7 zeigt, trennen die Sperrelemente 34 und 35 in der Blickrichtung 50 auch in der voneinander weg geschwenkten Stellung 28 der Rechen 15 und 16 den ersten Zwischenraum 29 vollständig vom zweiten Zwischenraum 30. Die Sperrelemente 34 und 35 besitzen im Ausführungsbeispiel eine Breite b, die quer zur Längsrichtung 36 des zugeordneten Fingers 17, 18 gemessen ist und die mindestens 10 mm beträgt. Vorteilhaft beträgt die Breite b von 10 mm bis 30 mm, insbesondere mindestens 20 mm. Die Breite b der Sperrelemente 34 und 35 verringert sich dabei in Richtung auf die freien Enden 32. Die Verringerung der Breite b ist vorteilhaft stetig. Insbesondere ergibt sich ein bogenförmiger Verlauf der Oberseite. Im Ausführungsbeispiel ist ein konkaver Verlauf der dem freien Enden 32 zugewandten Oberseite 37 der Sperrelemente 34 und 35 vorgesehen. Die Sperrelemente 34 und 35 sind als Nase ausgebildet und besitzen, wie auch Fig. 6 zeigt, jeweils eine abgerundete Spitze 52, an die die Oberseite 37 anschließt. An der der Oberseite 37 abgewandten Seite verlaufen die Sperrelemente 34, 35 senkrecht zur Innenseite 26 der Finger 17, 18. Die Sperrelemente 34, 35 besitzen keinen parallel zur Innenseite 26 verlaufenden Bereich, so dass Äste oder dgl. nicht an den Sperrelementen 34, 35 eingeklemmt werden können. Die Breite b der Sperrelemente 34, 35 beträgt vorteilhaft mindestens die Hälfte der Höhe h. Die Breite b ist insbesondere mindestens so groß wie die Höhe h. Im Ausführungsbeispiel ist die Breite b größer als die Höhe h.

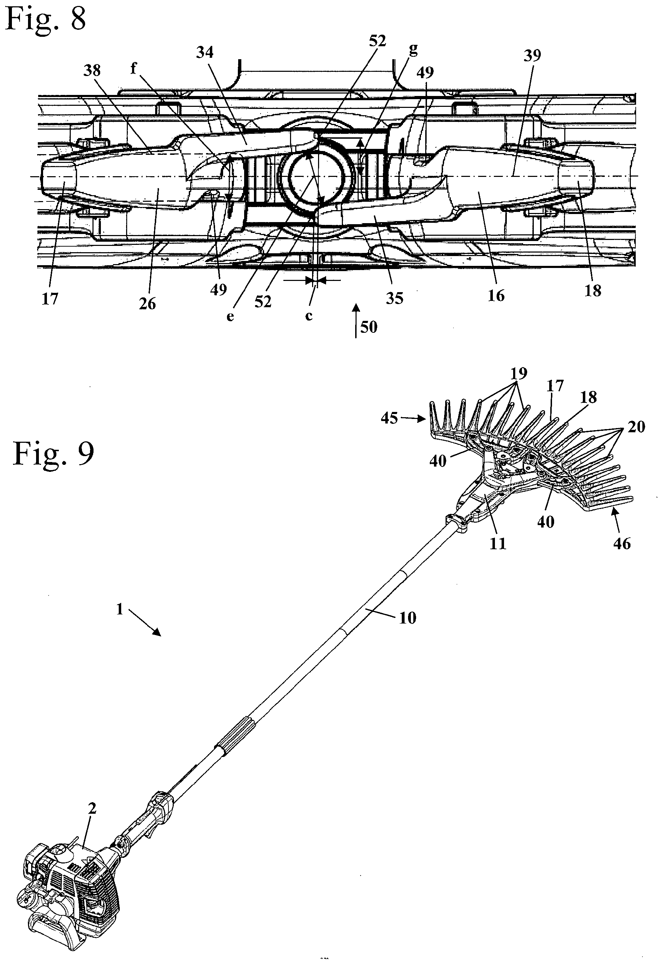

Wie Fig. 8 zeigt, überlappen sich die Sperrelemente 34 und 35 in der voneinander weg geschwenkten Stellung 28 der Rechen 15 und 16 in der Blickrichtung 50 mit einer Überlappung c, die größer als 0, insbesondere größer als 0,5 mm ist. Im Ausführungsbeispiel beträgt die Überlappung c mehr als 1 mm, insbesondere mehr als 2 mm beträgt. Es kann jedoch auch vorgesehen sein, dass zwischen den Sperrelementen 34 und 35 in der Blickrichtung 50 in der voneinander weg geschwenkten Stellung 28 der Rechen 15 und 16 ein geringer Spalt besteht. Die Breite des Spalts beträgt jedoch höchstens 5 mm. Dadurch können höchstens sehr dünne Äste aus dem zweiten Zwischenraum 30 in den ersten Zwischenraum 29 gelangen.

Der tatsächliche Abstand e zwischen den Sperrelementen 34 und 35, also der unabhängig von der Blickrichtung zwischen den Sperrelemente 34 und 35 bestehende Abstand, beträgt dabei vorteilhaft weniger als 20 mm, insbesondere weniger als 10 mm. Dadurch können selbst schrägstehende Äste nur bis zu einer Dicke, die dem Abstand e entspricht, also einer Dicke von weniger als 20 mm, insbesondere weniger als 10 mm, in den ersten Zwischenraum 29 gelangen. Der geringste Abstand e besteht dabei vorteilhaft in einer Blickrichtung parallel zur Bewegungsachse 51, die der Ansicht in Fig. 8 entspricht.

In Fig. 8 ist auch der Halteabschnitt 38 des linken Rechens 15 eingezeichnet. Der Halteabschnitt 38 besitzt eine Breite f, die senkrecht zur Mittelebene 39 gemessen ist. Der Abstand e beträgt vorteilhaft weniger als das Doppelte der Breite f, insbesondere weniger als das 1,5fache der Breite f des Halteabschnitts 38 Bevorzugt ist der Abstand e kleiner als die Breite f, insbesondere kleiner als das 0,75fache der Breite f. Die Sperrelemente 34, 35 besitzen an ihren abgerundeten Spitzen 52 einen senkrecht zur Mittelebene 39 gemessenen Abstand g zur Mittelebene 39. Der Abstand g beträgt vorteilhaft weniger als das Doppelte, insbesondere weniger als das 1,5fache der Breite f des Halteabschnitts 38. Der Abstand g ist bevorzugt kleiner als die Breite f, insbesondere kleiner als das 0,75fache der Breite f. Der Abstand g kann auch näherungsweise 0 sein, so dass die beiden Sperrelemente 34, 35 in der aufeinander zu geschwenkten Stellung der Rechen 15, 16 unmittelbar benachbart zueinander liegen.

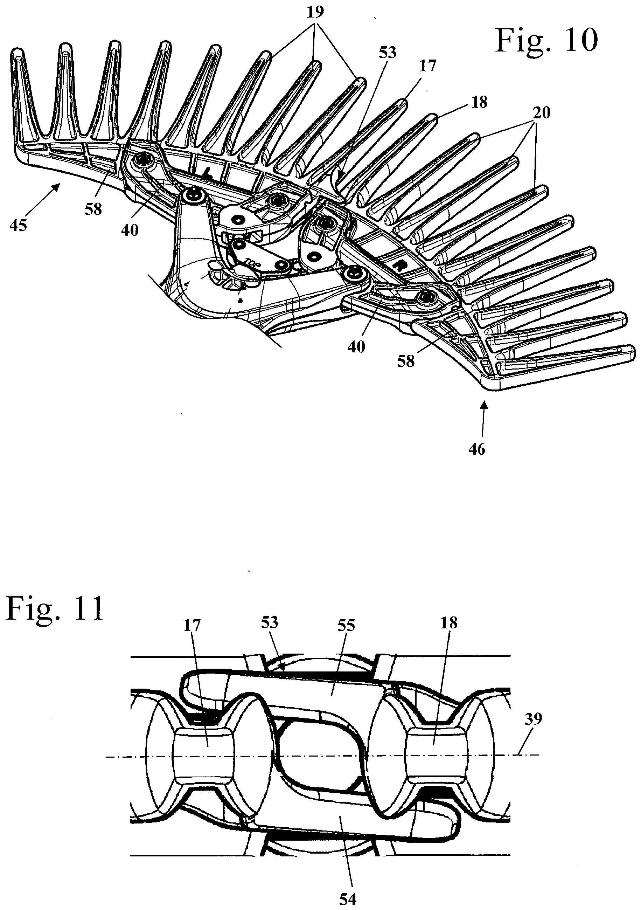

Fig. 9 zeigt das Erntegerät 1 mit einem zweiten Satz von Rechen 45 und 46. Der Aufbau der Rechen 45 und 46 entspricht im Wesentlichen dem der Rechen 15 und 16. Allerdings besitzen die Rechen 45 und 46 neben dem jeweils einen innenliegenden Finger 17, 18 jeweils acht weitere Finger 19, 20. Wie Fig. 10 zeigt, ragen die Halteabschnitte 58 der Rechen 45 und 46 an der dem jeweils anderen Rechen 45, 46 abgewandten Seite über den Rechenträger 40 hinaus. Die Rechen 45 und 46 besitzen aufgrund der größeren Halteabschnitte 58 und der größeren Anzahl von Fingern 19, 20 ein deutlich größeres Gewicht als die Rechen 15 und 16. Die Rechen 45 und 46 besitzen eine Sperreinrichtung 53, die in Fig. 11 gezeigt ist. Die Sperreinrichtung 53 besitzt ein erstes Sperrelement 54 am linken Rechen 45 sowie ein zweites Sperrelement 55 am rechten Rechen 46. Die Sperrelemente 54 und 55 sind entsprechend der Sperrelemente 34 und 35 angeordnet, jedoch gegenüber den Sperrelementen 34 und 35 spiegelsymmetrisch zur Mittelebene 39 der Rechen 45 und 46. Die Sperreinrichtungen 33 und 53 sind damit bezogen auf die Mittelebene 39 spiegelsymmetrisch zueinander ausgebildet.

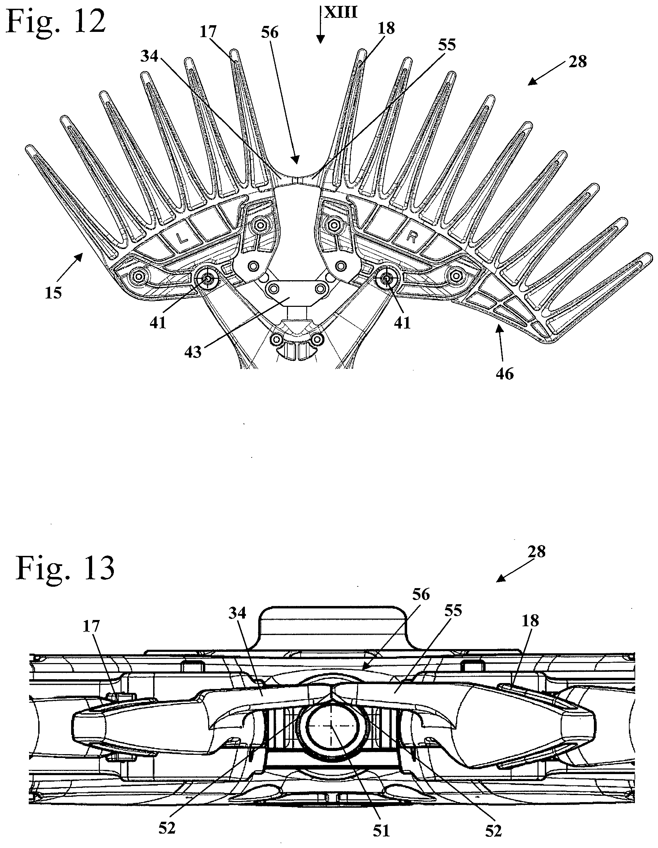

Fig. 12 zeigt das Erntegerät 1 mit einem linken Rechen 15 eines ersten Satzes von Rechen und dem rechten Rechen 46 des zweiten Satzes von Rechen. Aufgrund der spiegelsymmetrischen Gestaltung der Sperreinrichtungen 33 und 53 bilden die Sperrelemente 34 und 55 eine Blockiereinrichtung 56. Wie Fig. 13 zeigt, liegen die Sperrelemente 34 und 55 etwa in einer Ebene und berühren sich in der voneinander weg geschwenkten Stellung 28 der Rechen 15 und 46 mit ihren abgerundeten Spitzen 52. Dadurch ist ein Verschwenken der Rechen 15 und 46 in die aufeinander zu geschwenkte Stellung nicht möglich. Dies wird durch die Sperrelemente 34 und 55, die die Blockiereinrichtung 56 bilden, verhindert. Es kann auch vorgesehen sein, dass die Sperrelemente 34 und 55 derart ausgebildet sind, dass bereits die Montage der Rechen 15 und 46 an einem Erntegerät 1 nicht möglich ist. Es kann jedoch auch vorgesehen sein, dass die Sperrelemente 34 und 55 so ausgebildet sind, dass ein Blockieren erst kurz vor Erreichen der aufeinander zu geschwenkten Stellung gegeben ist.

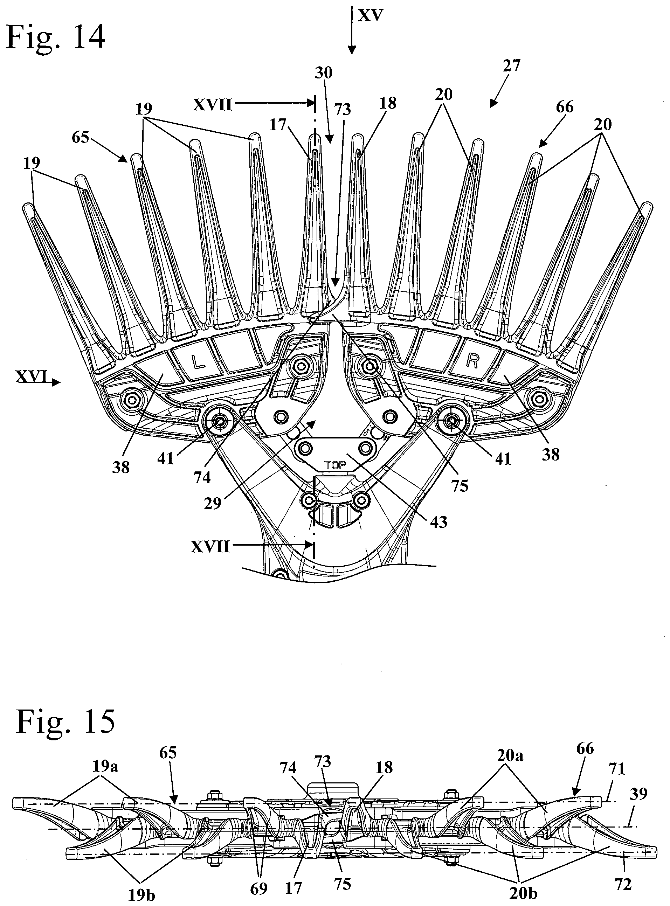

Fig. 14 zeigt ein weiteres Ausführungsbeispiel eines Satzes von Rechen für das Erntegerät 1, der einen linken Rechen 65 und einen rechten Rechen 66 umfasst. Die Rechen 65 und 66 besitzen eine Sperreinrichtung 73, die durch ein erstes Sperrelement 74 am linken Rechen 65 und ein zweites Sperrelement 75 am rechten Rechen 66 gebildet ist. Die Sperrelemente 74 und 75 sind auch in Fig. 15 gezeigt. Die Sperreinrichtung 73 ist entsprechend zur Sperreinrichtung 33 ausgebildet. Die Rechen 65 und 66 besitzen jeweils einen innenliegenden Finger 17 sowie fünf außenliegende Finger 19, 20. Das Gewicht der Rechen 65 und 66 entspricht damit etwa dem Gewicht der Rechen 15 und 16. Ein Betrieb des Erntegeräts mit einem linken Rechen 15 und einem rechten Rechen 66 bzw. mit einem linken Rechen 65 und einem rechten Rechen 16 ist zwar nicht vorgesehen, führt jedoch nicht zu Beschädigungen des Erntegeräts 1. Aufgrund der identischen Ausbildung der Sperreinrichtungen 33 und 73 ist ein Betrieb des Erntegeräts 1 mit einem Rechen 15 und einem Rechen 66 oder mit einem Rechen 65 und einem Rechen 16 möglich.

Wie Fig. 15 zeigt, liegen die Finger 17, 18, 19, 20 zur Mittelebene 39 versetzt. Die Finger erstrecken sich von dem gemeinsamen Halteabschnitt 38 auf gegenüberliegende Seiten der Mittelebene 39. Die freien Enden der Finger 17, 18, 19, 20 liegen dadurch in zwei zueinander versetzten Ebenen 71 und 72. Die Rechen 65, 66 besitzen Finger 19a bzw. 20a, deren freie Enden 32 in der Ebene 71 liegen, sowie Finger 19b bzw. 20b, deren freie Enden 32 in der Ebene 72 liegen und die auf der anderen Seite der Mittelebene 39 angeordnet sind. Wie Fig. 15 zeigt, sind Finger 19a und Finger 19b bzw. Finger 20a und 20b abwechselnd angeordnet. Auch die innenliegenden Finger 17 und 18 verlaufen auf gegenüberliegenden Seiten der Mittelebene 39. Im Ausführungsbeispiel liegt das erste Sperrelement 74 am linken Rechen 65 auf der dem innenliegenden Finger 17 abgewandten Seite der Mittelebene 39. Auch der innenliegende Finger 18 des rechten Rechens 66 und das zweite Sperrelement 75 liegen auf gegenüberliegenden Seiten der Mittelebene 39.

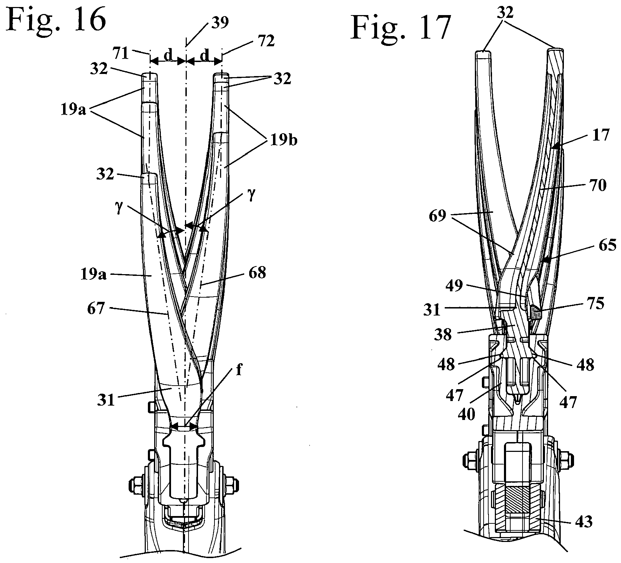

Wie auch Fig. 16 zeigt, sind die freien Enden 32 der Finger 19a, 19b, 20a und 20b der Rechen 65, 66 in einem Abstand d zur Mittelebene 39 angeordnet. Die Finger 18, 19a, 20a besitzen eine Längsrichtung 67, die jeweils die Befestigungsenden 31 der Finger 18, 19a, 20a mit den freien Enden 32 dieser Finger 18, 19a, 20a verbindet, und die zur Mittelebene 39 um einen Winkel γ geneigt liegen. Entsprechend besitzen die Finger 17, 19b, 20b eine Längsrichtung 68, die jeweils die Befestigungsenden 31 der Finger 17, 19b, 20b mit den freien Enden 32 dieser Finger 17, 19b, 20b verbindet, und die zur Mittelebene 39 ebenfalls um einen Winkel γ geneigt liegen. Im Ausführungsbeispiel beträgt der Winkel γ etwa 3° bis 20°, vorzugsweise 5° bis 10°. Der Winkel γ kann dabei für alle Finger 17, 18, 19a, 19b, 20a, 20b der Rechen 65 und 66 gleich sein. Es können jedoch auch unterschiedliche Winkel γ für unterschiedliche Finger 17, 18, 19a, 19b, 20a, 20b vorgesehen sein.

In der Schnittdarstellung in Fig. 17 ist der Aufbau des Fingers 17 im Einzelnen sichtbar. Die weiteren Finger der Rechen 65, 66 sind entsprechend ausgebildet. Der Finger 17 besitzt eine vergleichsweise dünne Mittelrippe 70, an deren Enden quer zur Mittelrippe 70 angeordnete Seitenrippen 69 verlaufen. Dadurch ergibt sich eine hohe Stabilität bei geringem Gewicht der Finger 17, 18, 19a, 19b, 20a, 20b. Fig. 17 zeigt auch die Anordnung des Halteabschnitts 38 im Rechenträger 40 im Einzelnen. Wie Fig. 17 zeigt, bewirken die Führungsleisten 48 in den Führungsnuten 47 eine formschlüssige Fixierung der Rechen 65, 66 im Rechenträger 40 in Richtung auf die freien Enden 32 der Finger. Der in Fig. 17 für den Finger 17 gezeigte Aufbau kann für alle Finger 17, 18, 19, 20 aller Rechen 15, 16, 45, 46, 65, 66 vorteilhaft sein.

Wie Fig. 17 zeigt, ragt das Sperrelement 75 in eine Aussparung 49 am Rechen 65. Das Sperrelement 75 erstreckt sich dabei bis in den Bereich des innenliegenden Fingers 17 des linken Rechens 65. Entsprechend ragt das Sperrelement 74 in eine nicht gezeigte Aussparung am Rechen 66. Aussparungen für das jeweils am anderen Rechen angeordnete Sperrelement sind vorteilhaft auch bei den Rechen 15, 16, 45, 46 vorgesehen. Die Aussparungen 49 bilden jeweils Gegenkonturen für die Sperrelemente 74, 75, in die sich die Sperrelemente 74, 75 in der inneren Endlage der Rechen 65, 66 einfügen.

In den Ausführungsbeispielen sind die Rechen 15, 16, 45, 46, 65, 66 separat von den Rechenträgern 40 ausgebildet und die Sperrelemente 34, 35, 54, 55, 74, 75 sind am Rechen 15, 16, 45, 46, 65, 66 angeordnet und einteilig mit den Rechen 15, 16, 45, 46, 65, 66 ausgebildet. Sperrelemente 34, 35, 54, 55, 74, 75 und Rechen 15, 16, 45, 46, 65, 66 bestehen aus dem gleichen Material, vorzugsweise aus glasfaserverstärktem Kunststoff. Es kann jedoch auch vorgesehen sein, mindestens ein Sperrelement 34, 35, 54, 55, 74, 75 einteilig mit einem Rechenträger 40 auszubilden. Das Sperrelement 34, 35, 54, 55, 74, 75 besteht dabei vorteilhaft aus dem Material des Rechenträgers 40, vorzugsweise aus Metall. Es kann auch vorgesehen sein, die Rechen 15, 16, 45, 46, 65, 66 einteilig mit den zugeordneten Rechenträgern 40 auszubilden und das Bauteil aus Rechen 15, 16, 45, 46, 65, 66 und Rechenträger 40 unmittelbar an den Armen 14 des Erntegeräts 1 zu lagern und mit den Schwenkhebeln 21 zu verbinden. In diesem Fall ist das Sperrelement 34, 35, 54, 55, 74, 75 vorteilhaft einteilig an dem gemeinsamen Bauteil angeordnet, insbesondere an dem einteiligen Bauteil angeformt. Das einteilige Bauteil aus Rechen 15, 16, 45, 46, 65, 66, Rechenträger 40 und Sperrelement 34, 35, 54, 55, 74, 75 besteht vorzugsweise aus Kunststoff.

## Patentansprüche

1. Erntegerät mit zwei schwenkbar gelagerten Rechen (15, 16; 45, 46; 65, 66), die zwischen einer aufeinander zu geschwenkten Stellung (27) und einer voneinander weg geschwenkten Stellung (28) verschwenkbar sind, wobei jeder Rechen (15, 16; 45, 46; 65, 66) mehrere Finger (17, 18, 19, 20) umfasst, die in einer Blickrichtung (50) parallel zu einer Schwenkachse (41) eines Rechens (15, 16; 45, 46; 65, 66) gesehen nebeneinander angeordnet sind, und mit einer Antriebseinheit, die mindestens ein Antriebselement (43) umfasst, das die Rechen (15, 16; 45, 46; 65 66) im Betrieb um ihre Schwenkachsen (41) gegenläufig hin- und herschwenkend bewegt, wobei jeder Rechen (15, 16; 45, 46; 65, 66) mit einem Rechenträger (40) gehalten ist, wobei jeder Rechen (15, 16; 45, 46; 65, 66) einen innenliegenden, dem anderen Rechen (15, 16; 45, 46; 65, 66) zugewandten Finger (17, 18) besitzt, wobei in der Blickrichtung (50) parallel zu einer Schwenkachse (41) eines Rechens (15, 16; 45, 46;65, 66) in der aufeinander zu geschwenkten Stellung (27) der Rechen (15, 16; 45, 46; 65, 66) ein erster Zwischenraum (29) und ein zweiter Zwischenraum (30) gebildet sind, wobei der erste Zwischenraum (29) mindestens teilweise von den Rechenträgern (40) und von dem Antriebselement (43) begrenzt ist und wobei der zweite Zwischenraum (30) mindestens teilweise von dem innenliegenden Finger (17) des ersten Rechens (15, 45, 65) und von dem innenliegenden Finger (18) des zweiten Rechens (16, 46, 66) begrenzt ist,
**dadurch gekennzeichnet, dass** das Erntegerät (1) eine Sperreinrichtung (33; 53; 73) besitzt, die mindestens ein mit einem Rechen (15, 16; 45, 46; 65, 66) bewegtes Sperrelement (34, 35; 54, 55; 74, 75) umfasst, das in der Blickrichtung (50) parallel zu einer Schwenkachse (41) eines Rechens (15, 16; 45, 46; 65, 66) zwischen den ersten Zwischenraum (29) und den zweiten Zwischenraum (30) ragt, und dass die Sperreinrichtung (33; 53; 73) den ersten Zwischenraum (29) und den zweiten Zwischenraum (30) in jeder Stellung der Rechen (15, 16; 45, 46; 65, 66) derart voneinander trennt, dass die Zwischenräume (29, 30) in der Blickrichtung (50) parallel zu einer Schwenkachse (41) eines Rechens (15, 16; 45, 46; 65, 66) höchstens über einen Spalt von maximal 5 mm verbunden sind.

2. Erntegerät nach Anspruch 1,
**dadurch gekennzeichnet, dass** die Sperreinrichtung (33; 53; 73) den ersten Zwischenraum (29) und den zweiten Zwischenraum (30) in jeder Stellung der Rechen (15, 16; 45, 46; 65, 66) in der Blickrichtung (50) parallel zu einer Schwenkachse (41) eines Rechens (15, 16; 45, 46; 65, 66) vollständig voneinander trennt.

3. Erntegerät nach Anspruch 1 oder 2,
**dadurch gekennzeichnet, dass** der zweite Zwischenraum (30) eine Breite (a) aufweist, wobei die Breite (a) des Zwischenraums (30) sich vom Sperrelement (34, 35; 54, 55; 74, 75) bis zu den freien Enden (32) der innenliegenden Finger (17, 18) der Rechen (15, 16; 45, 46; 65, 66) nicht verringert.

4. Erntegerät nach einem der Ansprüche 1 bis 3,
**dadurch gekennzeichnet, dass** die Innenseiten (26) der innenliegenden Finger (17, 18) der Rechen (15, 16; 45, 46; 65, 66) in der Blickrichtung (50) parallel zu einer Schwenkachse (41) eines Rechens (15, 16; 45, 46; 65, 66) in der aufeinander zu geschwenkten Stellung (27) der Rechen (15, 16; 45, 46; 65, 66) einen Winkel (α) einschließen, der größer als 0° ist und in Richtung auf die freien Enden (32) der innenliegenden Finger (17, 18) öffnet.

5. Erntegerät nach einem der Ansprüche 1 bis 4,
**dadurch gekennzeichnet, dass** das Sperrelement (34, 35; 54, 55; 74, 85) als Nase ausgebildet ist.

6. Erntegerät nach einem der Ansprüche 1 bis 5,
**dadurch gekennzeichnet, dass** die Breite (b) des Sperrelements (34, 35; 54, 55; 74, 75), die quer zur Längsrichtung (36) des zugeordneten innenliegenden Fingers (17, 18) gemessen ist, zum freien Ende (32) der Finger (17, 18) hin abnimmt.

7. Erntegerät nach einem der Ansprüche 1 bis 6,
**dadurch gekennzeichnet, dass** das Sperrelement (34, 35; 54, 55; 74, 75) eine den zweiten Zwischenraum (30) begrenzende Oberseite (37) besitzt, die konkav verläuft.

8. Erntegerät nach einem der Ansprüche 1 bis 7,
**dadurch gekennzeichnet, dass** das Sperrelement (34, 35; 54, 55; 74, 75) an einem Befestigungsende (31) des innenliegenden Fingers (17, 18) des Rechens (15, 16; 45, 46; 65, 66) an dem Rechen (15, 16; 45, 46; 65, 66) festgelegt ist.

9. Erntegerät nach einem der Ansprüche 1 bis 8,
**dadurch gekennzeichnet, dass** das Sperrelement (34, 35; 54, 55; 74, 75) in der aufeinander zu geschwenkten Stellung (27) der Rechen (15, 16; 45, 46; 65, 66) in der Blickrichtung (50) parallel zu einer Schwenkachse (41) eines Rechens (15, 16; 45, 46; 65, 66) den anderen Rechen (15, 16; 45, 46; 65, 66) überlappt.

10. Erntegerät nach einem der Ansprüche 1 bis 9,
**dadurch gekennzeichnet, dass** jeder Rechen (15, 16; 45, 46; 65, 66) ein Sperrelement (34, 35; 54, 55; 74, 75) besitzt und dass die beiden Sperrelemente (34, 35; 54, 55; 74, 75) die Sperreinrichtung (33; 53; 73) bilden.

11. Erntegerät nach Anspruch 10,
**dadurch gekennzeichnet, dass** die beiden Rechen (15, 16; 45, 46; 65, 66) achsensymmetrisch zur Bewegungsachse (51) des Antriebselements (43) ausgebildet sind.

12. Erntegerät nach einem der Ansprüche 1 bis 11,
**dadurch gekennzeichnet, dass** das Erntegerät (1) einen ersten Satz von Rechen (15, 16; 65, 66) mit einem linken Rechen (15; 65) und einem rechten Rechen (16; 66) und einen zweiten Satz von Rechen (45, 46) mit einem linken Rechen (45) und einem rechten Rechen (46) besitzt, wobei die Sperreinrichtungen (33; 53; 73) derart ausgebildet sind, dass der rechte Rechen (16; 65) des ersten Satzes von Rechen (15, 16; 65, 66) und der linke Rechen (45) des zweiten Satzes von Rechen (45, 46) sowie der linke Rechen (15; 65) des ersten Satzes von Rechen (15, 16; 65, 66) und der rechte Rechen (46) des zweiten Satzes von Rechen (45, 46) sich jeweils in der aufeinander zu geschwenkten Stellung (27) blockieren.

13. Erntegerät nach Anspruch 12,
**dadurch gekennzeichnet, dass** die Sperreinrichtung (33; 73) des ersten Satzes von Rechen (15, 16; 65, 66) bezogen auf eine Mittelebene (39) eines Rechens (15, 16; 45, 46; 65, 66) spiegelsymmetrisch zu der Sperreinrichtung (53) des zweiten Satzes von Rechen (45, 46) angeordnet ist.

14. Erntegerät nach einem der Ansprüche 1 bis 13,
**dadurch gekennzeichnet, dass** der Rechen (15, 16; 45, 46; 65, 66) einen Halteabschnitt (38) besitzt, an dem alle Finger (17, 18, 19, 20) des Rechens (15, 16; 45, 46; 65, 66) gehalten sind und mit dem der Rechen (15, 16; 45, 46; 65, 66) am Rechenträger (40) festgelegt ist.

15. Erntegerät nach einem der Ansprüche 1 bis 14,
**dadurch gekennzeichnet, dass** das Erntegerät (1) ein Führungsrohr (10) besitzt, an dessen einem Ende (50) die Rechen (15) angeordnet sind, dass die Bewegung des Antriebselements (43) über mindestens einen Gelenkhebel (21) auf den Rechen (15) übertragen wird, wobei der Gelenkhebel (21) an einem ersten Befestigungspunkt (22) am Antriebselement (43) und an einem zweiten Befestigungspunkt (23) am Rechenträger (40) gehalten ist und wobei der Gelenkhebel den ersten Zwischenraum (29) begrenzt.

16. Rechen für ein Erntegerät, wobei der Rechen (15, 16; 45, 46; 65, 66) einen im Betrieb einem weiteren Rechen (15, 16; 45, 46; 65, 66) zugewandten, innenliegenden Finger (17, 18) besitzt, und wobei der Rechen (15, 16; 45, 46; 65, 66) eine Mittelebene (39) besitzt, in der ein Halteabschnitt (38, 58) des Rechens (15, 16; 45, 46; 65, 66) zur Fixierung des Rechens (15, 16; 45, 46; 65, 66) an einem Erntegerät (1) liegt,
**dadurch gekennzeichnet, dass** der Rechen (15, 16; 45, 46; 65, 66) ein Sperrelement (34, 35; 54, 55; 74, 75) besitzt, das sich von einer Seite seines innenliegenden Fingers (17, 18) erstreckt, wobei das Sperrelement (34, 35; 54, 55; 74, 75) eine Breite (b) besitzt, die in einer Blickrichtung (50) senkrecht zur Mittelebene (39) senkrecht zu einer Innenseite (26) des innenliegenden Fingers (17, 18) gemessen ist und die mindestens 10 mm beträgt.

## Claims

1. Harvesting device with two pivotably mounted rakes (15, 16; 45, 46; 65, 66) pivotable between a position (27) in which they are pivoted towards each other and a position (28) in which they are pivoted away from each other, wherein each rake (15, 16; 45, 46; 65, 66) comprises a plurality of fingers (17, 18, 19, 20), which are arranged next to one another in a direction of view (50) parallel to a pivot axis (41) of a rake (15, 16; 45, 46; 65, 66), and with a drive unit comprising at least one drive element (43) pivoting the rakes (15, 16; 45, 46; 65, 66) to and fro about their pivot axis (41) in opposite directions in operation, wherein each rake (15, 16; 45, 46; 65, 66) is held by a rake support (40), wherein each rake (15, 16; 45, 46; 65, 66) has an inner finger (17, 18) facing the other rake (15, 16; 45, 46; 65, 66), wherein a first gap (29) and a second gap (30) are formed in the direction of view (50) parallel to a pivot axis (41) of a rake (15, 16; 45, 46; 65, 66) in the position (27) in which the rakes (15, 16; 45, 46; 65, 66) are pivoted towards each other, wherein the first gap (29) is at least partially bounded by the rake support (40) and the drive element (43) and wherein the second gap (30) is at least partially bounded by the inner finger (17) of the first rake (15, 45, 65) and by the inner finger (18) of the second rake (16, 46, 66),
**characterised in that** the harvesting device (1) has a locking device (33; 53; 73), which comprises at least one locking element (34, 35; 54, 55; 74, 75), which is moved with a rake (15, 16; 45, 46; 65, 66) and extends in the direction of view (50) parallel to a pivot axis (41) of a rake (15, 16; 45, 46; 65, 66) between the first gap (29) and the second gap (30), and **in that** the locking device (33; 53; 73) separates the first gap (29) and the second gap (30) in each position of the rakes (15, 16; 45, 46; 65, 66) in such a way that the gaps (29, 30) are in the direction of view (50) parallel to a pivot axis (41) of a rake (15, 16; 45, 46; 65, 66) at most connected by way of a gap of no more than 5 mm.

2. Harvesting device according to claim 1,
**characterised in that** the locking device (33; 53; 73) separates the first gap (29) and the second gap (30) in each position of the rakes (15, 16; 45, 46; 65, 66) completely from each other in the direction of view (50) parallel to a pivot axis (41) of a rake (15, 16; 45, 46; 65, 66).

3. Harvesting device according to claim 1 or 2,
**characterised in that** the second gap (30) has a width (a), wherein the width (a) of the gap (30) does not decrease from the locking element (34, 35; 54, 55; 74, 75) to the free ends (32) of the inner fingers (17, 18) of the rakes (15, 16; 45, 46; 65, 66).

4. Harvesting device according to any of claims 1 to 3,
**characterised in that** the insides (26) of the inner fingers (17, 18) of the rakes (15, 16; 45, 46; 65, 66) enclose in the direction of view (50) parallel to a pivot axis (41) of a rake (15, 16; 45, 46; 65, 66) in the position (27) in which the rakes (15, 16; 45, 46; 65, 66) are pivoted towards each other an angle (α), which is greater than 0° and opens in the direction towards the free ends (32) of the inner fingers (17, 18).

5. Harvesting device according to any of claims 1 to 4,
**characterised in that** the locking element (34, 35; 54, 55; 74, 75) is designed as a lug.

6. Harvesting device according to any of claims 1 to 5,
**characterised in that** the width (b) of the locking element (34, 35; 54, 55; 74, 75), which is measured transversely to the longitudinal direction (36) of the associated inner finger (17, 18), decreases towards the free end (32) of the fingers (17, 18).

7. Harvesting device according to any of claims 1 to 6,
**characterised in that** the locking element (34, 35; 54, 55; 74, 75) has a first, concave top side (37), which bounds the second gap (30).

8. Harvesting device according to any of claims 1 to 7,
**characterised in that** the locking element (34, 35; 54, 55; 74, 75) is fixed to the rake (15, 16; 45, 46; 65, 66) at a fastening end (31) of the inner finger (17, 18) of the rake (15, 16; 45, 46; 65, 66).

9. Harvesting device according to any of claims 1 to 8,
**characterised in that** the locking element (34, 35; 54, 55; 74, 75) overlaps, in the position (27) in which the rakes (15, 16; 45, 46; 65, 66) are pivoted towards each other in the direction of view (50) parallel to a pivot axis (41) of a rake (15, 16; 45, 46; 65, 66), the other rake (15, 16; 45, 46; 65, 66).

10. Harvesting device according to any of claims 1 to 9,
**characterised in that** each rake (15, 16; 45, 46; 65, 66) has a locking element (34, 35; 54, 55; 74, 75), and **in that** the two locking elements (34, 35; 54, 55; 74, 75) form the locking device (33; 53; 73).

11. Harvesting device according to claim 10,
**characterised in that** the two rakes (15, 16; 45, 46; 65, 66) are designed to be axisymmetric to the movement axis (51) of the drive element (43).

12. Harvesting device according to any of claims 1 to 11,
**characterised in that** the harvesting device (1) has a first set of rakes (15, 16; 65, 66) with a left-hand rake (15; 65) and a right-hand rake (16; 66) and a second set of rakes (45, 46) with a left-hand rake (45) and a right-hand rake (46), wherein the locking devices (33; 53; 73) are designed such that the right-hand rake (16; 66) of the first set of rakes (15, 16; 65, 66) and the left-hand rake (45) of the second set of rakes (45, 46) as well as the left-hand rake (15; 65) of the first set of rakes (15, 16; 65, 66) and the right-hand rake (46) of the second set of rakes (45, 46) in each case block one another in the position (27) in which they are pivoted towards each other.

13. Harvesting device according to claim 12,
**characterised in that** the locking device (33; 73) of the first set of rakes (15, 16; 65, 66) is arranged mirror-symmetrically to the locking device (53) of the second set of rakes (45, 46) with respect to a central plane (39) of a rake (15, 16; 45, 46; 65, 66).

14. Harvesting device according to any of claims 1 to 13,
**characterised in that** the rake (15, 16; 45, 46; 65, 66) has a holding section (38), at which all fingers (17, 18, 19, 20) of the rake (15, 16; 45, 46; 65, 66) are held and with which the rake (15, 16; 45, 46; 65, 66) is fixed to the rake support (40).

15. Harvesting device according to any of claims 1 to 14,
**characterised in that** the harvesting device (1) has a guide tube (10), at one end (50) of which the rakes (15) are arranged, and **in that** the movement of the drive element (43) is transmitted to the rake (15) by way of at least one toggle lever (21), wherein the toggle lever (21) is held at a first fastening point (22) at the drive element (43) and at a second fastening point (23) at the rake support (40), and wherein the toggle lever bounds the first gap (29).

16. Rake for a harvesting device, wherein the rake (15, 16; 45, 46; 65, 66) has an inner finger (17, 18), which faces a further rake (15, 16; 45, 46; 65, 66) in operation, and wherein the rake (15, 16; 45, 46; 65, 66) has a central plane (39), in which lies a holding section (38, 58) of the rake (15, 16; 45, 46; 65, 66) for fixing the rake (15, 16; 45, 46; 65, 66) to a harvesting device (1),
**characterised in that** the rake (15, 16; 45, 46; 65, 66) has a locking element (34, 35; 54, 55; 74, 75), which extends from one side of its inner finger (17, 18), wherein the locking element (34, 35; 54, 55; 74, 75) has a width (b), which is measured transversely to an inside (26) of the inner finger (17, 18) in a direction of view (50) perpendicular to the central plane (39) and is at least 10 mm.

## Revendications

1. Appareil de récolte avec deux râteaux (15, 16; 45, 46; 65, 66) montés pivotants qui sont aptes à pivoter entre une position de pivotement convergent (27) et une position de pivotement divergent (28), dans lequel chaque râteau (15, 16; 45, 46; 65, 66) comprend plusieurs doigts (17, 18, 19, 20) qui, vus dans une direction de vision (50) parallèle à un axe de pivotement (41) d'un râteau (15, 16; 45, 46; 65, 66), sont disposés côte à côte, et avec une unité d'entraînement qui comprend au moins un élément d'entraînement (43) qui déplace les râteaux (15, 16; 45, 46; 65, 66), en fonctionnement, avec un mouvement pivotant de va-et-vient contraire autour de leurs axes de pivotement (41), dans lequel chaque râteau (15, 16; 45, 46; 65, 66) est retenu avec un porte-râteau (40), dans lequel chaque râteau (15, 16; 45, 46; 65, 66) a un doigt intérieur (17, 18) tourné vers l'autre râteau (15, 16; 45, 46; 65, 66), dans lequel dans la direction de vision (50) parallèle à un axe de pivotement (41) d'un râteau (15, 16; 45, 46; 65, 66), dans la position de pivotement convergent (27) des râteaux (15, 16; 45, 46; 65, 66) un premier espace intermédiaire (29) et un deuxième espace intermédiaire (30) sont formés, dans lequel le premier espace intermédiaire (29) est au moins partiellement délimité par les porte-râteau (40) et par l'élément d'entraînement (43), et dans lequel le deuxième espace intermédiaire (30) est au moins partiellement délimité par le doigt intérieur (17) du premier râteau (15, 45, 65) et par le doigt intérieur (18) du deuxième râteau (16, 46, 66),
**caractérisé en ce que** l'appareil de récolte (1) a un dispositif d'arrêt (33; 53, 73) qui comprend au moins un élément d'arrêt (34, 35; 54, 55; 74, 75) déplacé avec un râteau (15, 16; 45, 46; 65, 66) qui, dans la direction de vision (50) parallèle à un axe de pivotement (41) d'un râteau (15, 16; 45, 46; 65, 66), dépasse entre le premier espace intermédiaire (29) et le deuxième espace intermédiaire (30), et **en ce que** le dispositif d'arrêt (33; 53, 73) sépare l'un de l'autre le premier espace intermédiaire (29) et le deuxième espace intermédiaire (30) dans n'importe quelle position des râteaux (15, 16; 45, 46; 65, 66) de telle sorte que les espaces intermédiaires (29, 30), dans la direction de vision (50) parallèle à un axe de pivotement (41) d'un râteau (15, 16; 45, 46; 65, 66), soient reliés au plus par un interstice de 5 mm au maximum.

2. Appareil de récolte selon la revendication 1,
**caractérisé en ce que** le dispositif d'arrêt (33; 53, 73) sépare complètement l'un de l'autre le premier espace intermédiaire (29) et le deuxième espace intermédiaire (30) dans n'importe quelle position des râteaux (15, 16; 45, 46; 65, 66), dans la direction de vision (50) parallèle à un axe de pivotement (41) d'un râteau (15, 16; 45, 46; 65, 66).

3. Appareil de récolte selon la revendication 1 ou 2,
**caractérisé en ce que** le deuxième espace intermédiaire (30) présente une largeur (a), dans lequel la largeur (a) du deuxième espace intermédiaire (30) ne diminue pas de l'élément d'arrêt (34, 35; 54, 55; 74, 75) jusqu'aux extrémités libres (32) des doigts intérieurs (17, 18) des râteaux (15, 16; 45, 46; 65, 66).

4. Appareil de récolte selon l'une des revendications 1 à 3,
**caractérisé en ce que** les côtés intérieurs (26) des doigts intérieurs (17, 18) des râteaux (15, 16; 45, 46; 65, 66), dans la direction de vision (50) parallèle à un axe de pivotement (41) d'un râteau (15, 16; 45, 46; 65, 66), définissent dans la position de pivotement convergent (27) des râteaux (15, 16; 45, 46; 65, 66) un angle (α) qui est supérieur à 0° et s'ouvre en direction des extrémités libres (32) des doigts intérieurs (17, 18).

5. Appareil de récolte selon l'une des revendications 1 à 4,
**caractérisé en ce que** l'élément d'arrêt (34, 35; 54, 55; 74, 75) est formé comme un bec.

6. Appareil de récolte selon l'une des revendications 1 à 5,
**caractérisé en ce que** la largeur (b) de l'élément d'arrêt (34, 35; 54, 55; 74, 75) qui est mesurée transversalement par rapport à la direction longitudinale (36) du doigt intérieur (17, 18) associé diminue en direction de l'extrémité libre (32) des doigts (17, 18).

7. Appareil de récolte selon l'une des revendications 1 à 6,
**caractérisé en ce que** l'élément d'arrêt (34, 35; 54, 55; 74, 75) a un côté supérieur (37) délimitant le deuxième espace intermédiaire (30) qui est concave.

8. Appareil de récolte selon l'une des revendications 1 à 7,
**caractérisé en ce que** l'élément d'arrêt (34, 35; 54, 55; 74, 75) est immobilisé sur le râteau (15, 16; 45, 46; 65, 66) à une extrémité de fixation (31) du doigt intérieur (17, 18) du râteau (15, 16; 45, 46; 65, 66).

9. Appareil de récolte selon l'une des revendications 1 à 8,
**caractérisé en ce que** l'élément d'arrêt (34, 35; 54, 55; 74, 75), dans la position de pivotement convergent (27) du râteau (15, 16; 45, 46; 65, 66), recouvre l'autre râteau (15, 16; 45, 46; 65, 66) dans la direction de vision (50) parallèle à un axe de pivotement (41) d'un râteau (15, 16; 45, 46; 65, 66).

10. Appareil de récolte selon l'une des revendications 1 à 9,
**caractérisé en ce que** chaque râteau (15, 16; 45, 46; 65, 66) a un élément d'arrêt (34, 35; 54, 55; 74, 75) et **en ce que** les deux éléments d'arrêt (34, 35; 54, 55; 74, 75) forment le dispositif d'arrêt (33; 53; 73).

11. Appareil de récolte selon la revendication 10,
**caractérisé en ce que** les deux râteaux (15, 16; 45, 46; 65, 66) sont formés avec une symétrie axiale par rapport à l'axe de déplacement (51) de l'élément d'entraînement (43).

12. Appareil de récolte selon l'une des revendications 1 à 11,
**caractérisé en ce que** l'appareil de récolte (1) a un premier ensemble de râteaux (15, 16; 65, 66) avec un râteau gauche (15; 65) et un râteau droit (16; 66), et un deuxième ensemble de râteaux (45, 46) avec un râteau gauche (45) et un râteau droit (46), dans lequel les dispositifs d'arrêt (33; 53, 73) sont formés de telle sorte que le râteau droit (16; 65) du premier ensemble de râteaux (15, 16; 65, 66) et le râteau gauche (46) du deuxième ensemble de râteaux (45, 46) ainsi que le râteau gauche (15; 65) du premier ensemble de râteaux (15, 16; 65, 66) et le râteau droit (46) du deuxième ensemble de râteaux (45, 46) se bloquent respectivement dans la position de pivotement convergent (27).

13. Appareil de récolte selon la revendication 12,
**caractérisé en ce que** le dispositif d'arrêt (33; 73) du premier ensemble de râteaux (15, 16; 65, 66), par rapport à un plan médian (39) d'un râteau (15, 16; 45, 46; 65, 66), est disposé en miroir par rapport au dispositif d'arrêt (53) du deuxième ensemble de râteaux (45, 46).

14. Appareil de récolte selon l'une des revendications 1 à 13,
**caractérisé en ce que** le râteau (15, 16; 45, 46; 65, 66) a une section de retenue (38) à laquelle tous les doigts (17, 18, 19, 20) du râteau (15, 16; 45, 46; 65, 66) sont retenus et avec laquelle le râteau (15, 16; 45, 46; 65, 66) est immobilisé sur le porte-râteau (40).

15. Appareil de récolte selon l'une des revendications 1 à 14,
**caractérisé en ce que** l'appareil de récolte (1) a un tube de guidage (10) à une extrémité (50) duquel sont disposés les râteaux (15), **en ce que** le mouvement de l'élément d'entraînement (43) est transmis par au moins un levier articulé (21) au râteau (15), dans lequel le levier articulé (21) est retenu à un premier point de fixation (22) sur l'élément d'entraînement (43) et à un deuxième point de fixation (23) sur le porte-râteau (40), et dans lequel le levier articulé délimite le premier espace intermédiaire (29).

16. Râteau pour un appareil de récolte, dans lequel le râteau (15, 16; 45, 46; 65, 66) a un doigt intérieur (17, 18) tourné vers un autre râteau (15, 16; 45, 46; 65, 66), en fonctionnement, et dans lequel le râteau (15, 16; 45, 46; 65, 66) a un plan médian (39) dans lequel se trouve une section de retenue (38, 58) du râteau (15, 16; 45, 46; 65, 66) pour la fixation du râteau (15, 16; 45, 46; 65, 66) à un appareil de récolte (1),
**caractérisé en ce que** le râteau (15, 16; 45, 46; 65, 66) a un élément d'arrêt (34, 35; 54, 55; 74, 75) qui s'étend depuis un côté de son doigt intérieur (17, 18), dans lequel l'élément d'arrêt (34, 35; 54, 55; 74, 75) a une largeur (b) qui, dans une direction de vision (50) perpendiculaire à l'axe médian (39), est mesurée perpendiculairement à un côté intérieur (26) du doigt intérieur (17, 18) et qui est d'au moins 10 mm.
